# EUROPEAN PATENT SPECIFICATION

(11) **EP 3 606 975 B1**
(45) Date of publication and mention of the grant of the patent: **20.01.2021**
(21) Application number: 18714538.8
(22) Date of filing: 06.04.2018
(51) Int. Cl.: C08G 18/76, C08G 18/80, C09D 175/12, C08G 18/78

(54) **COATING FILMS WITH REDUCED YELLOWING**
BESCHICHTUNGSFILM MIT VERMINDERTER VERGILBUNG
PELLICULE DE REVÊTEMENT AVEC JAUNISSEMENT RÉDUIT

(30) Priority: 07.04.2017 EP 17165471
(43) Date of publication of application: 12.02.2020
(73) Proprietor: Allnex Austria GmbH, 8402 Werndorf (AT)
(72) Inventor: PAAR, Willibald, 8010 Graz (AT); SCHIPFER, Rudolf, 8010 Graz (AT); BAMBACH, Erik, 8402 Werndorf (AT); CVETKO, Norbert, 8010 Graz (AT)
(74) Representative: Boon, Greet
(86) International application number: PCT/EP2018/058845
(87) International publication number: WO 2018/185276

(56) References cited:
- EP-A1- 2 319 877
- EP-A1- 2 774 957
- WO-A1-00/37571
- US-A1- 2003 094 382

## Description

### Field of the Invention

This invention relates to a coating composition that can be used to form coating films with a reduced propensity to yellowing.

### Background of the Invention

Depending on the chemical structure of the ingredients in a coating composition, coating films formed therewith on substrates may show yellowing upon being subjected to heat or irradiation with visible light or UV light. This yellowing is usually the result of oxydation processes of any of the components of the coating composition, binders, additives or pigments. Oxydation processes are usually accelerated by energy absorbed within the coating film. These oxydation processes may lead to formation of chromophores which tend to absorb UV light and blue visible light leading to a colour shift towards yellow, thereby accelerating the oxydation process further. Such yellowing is frequently observed for coating compositions based on aromatic molecules, or aliphatic structures having conjugated carbon-carbon double bonds, or can form conjugated carbon-carbon double bonds in the coating composition or coating film during thermal or light-induced oxydation. As such chemical structures are also desired in coatings because of their imminent properties, such as good corrosion protection and higher thermal resistance, there is a need to protect coating films from undue yellowing.

In the patent US 5,320,738 A, electrodepositable coating compositions are disclosed which comprise an active hydrogen-containing ionic resin and a curing agent which contains blocked isocyanate groups and oxazolidone groups having the structure of formula I 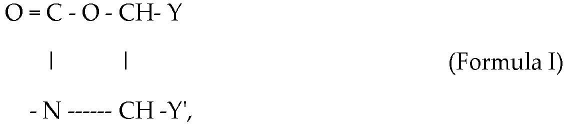 where Y and Y' are different and are hydrogen or a residue from an epoxy resin. The presence of these latter groups is said to reduce the propensity to yellowing.

US Patent 5,631,319 A relates to isocyanate cured coating compositions with reduced yellowing, the compositions comprising (a) a component comprising at least one functional group that is reactive with isocyanate; (b) a polyisocyanate functional material whose isocyanate groups are at least partially capped with a ketoxime; and (c) an N-amino carbamate separate from (a) or (b) or grafted onto (b), and represented by the structural formula II:

X - R¹ - O - C(O) - NH - NH - R² (Formula II),

where R¹ is chosen from the group consisting of alkyl, cycloalkyl and aryl groups, R¹ being substantially free of groups reactive with isocyanate, and R² is chosen from the group consisting of hydrogen, alkyl, cycloalkyl, and aryl groups, and X is chosen from the group consisting of hydrogen, hydroxyls, amines, halogens, or is a divalent linking group.

Disadvantages of these compositions are that the choice of crosslinkers is limited in the case of US 5,320,738 A, and that in the case of US 5,631,319 A, preparation of the additive involves the handling of anhydrous hydrazine.

In EP 2 774 957 A1, cationic paint additives are disclosed which are plastified reaction products of epoxide resins E and amines A, wherein the reaction products of epoxides E and amines A further comprise moieties of aromatic or aliphatic dihydroxy compounds D, and preferably also of fatty acids F having from six to thirty carbon atoms, and optionally, one or more olefinic unsaturations, and wherein at least a part of the plastifier P is incorporated by chemical reaction within the reaction products of epoxide resins E and amines A. See claim 1. The amines A are defined as comprising at least one amine A1 having at least one primary or secondary amino group, from three to twenty carbon atoms, and optionally at least one hydroxyl group, which amine A1 may be an aliphatic amine or an aliphatic-aromatic amine wherein the aminic nitrogen atom is bound to an aliphatic carbon atom. They preferably also comprise at least one aliphatic amine A2 having from three to twenty carbon atoms, at least one primary amino group, and at least one tertiary amino group. See page 3, paragraph [0014]. In example 3e, an epoxy resin modified by reaction with amines and fatty acid amidoamines is disclosed which is made by reacting an aminofunctional fatty acid amide, bisphenol A, diethanolamine, dimethylaminopropylamine, and a liquid epoxide resin. See paragraph [0051]. Depending on including or not including the amidoamine in the amines, the specific amount of tertiary amino groups in the amines, *n*(³N)/*m*(amines), is 1.04 mol/kg or 4.56 mol/kg in example 3e. There is no teaching, suggestion, or motivation to limit the specific amount of substance of tertiary amino groups in the amines to not more than 0.1 mol/kg, and thereby avoid yellowing or other discolouration. Yellowing or discolouration is not mentioned at all in this patent application.

In US 2003/0094382 A1, a cationic electrodeposition coating composition is disclosed which includes a resin dispersion, wherein the dried coating film of the electrodeposition paint is lead-free and has an epoxy-acrylic double-layered structure for displaying excellent properties, and in which an organic solvent content can be minimised. See the abstract. As disclosed in paragraph [0036], the cationic electrodeposition synthetic resin obtained by an epoxy-amino addition reaction may be manufactured by using an epoxy resin, polycaprolactonediol, bisphenol A, and benzyl dimethyl amine. The latter is a tertiary amine. In examples 1 and 2 according to this invention, the specific amount of tertiary amino groups in the amines *n*(³N) / *m*(amines) is 0.225 mol/kg in the cationic electrodeposition resin of Table 4. The cationic acrylic resin was not included in the amines for this calculation; the value of *n*(³N) / *m*(amines) would have been still higher (0.441 mol/kg) if it were included. No numerical data on yellowing which was measured on an unspecified white enamel coated upon the cationic electrodeposition coating composition are given in this patent application. No influence of the specific amount of substance of tertiary amino groups in the epoxy-amine adduct is discussed. The presence of allophanate groups in the crosslinker is not mentioned, nor is there any suggestion to use a crosslinker comprising allophanate groups.

In WO 2000/037 571 A1, an electrocoat coating composition is described which comprises an electrodepositable resin, referred to as principal film-forming resin, that has functionality reactive with isocyanate and a curing agent having at least one allophanate group. The invention also provides a method of applying the composition of the invention to a substrate and curing the applied coating. See the abstract. The principal film-forming resin is preferably an epoxy resin functionalised with amine groups. The amines which are used to incorporate primary, secondary or tertiary amino groups into the said resin by reaction with the epoxy resin are mentioned in page 12, line 10 et seq., as amines or polyamines, and include as typical compounds dibutylamine, ethylenediamine, diethylenetriamine, triethylenetetramine, di-methylaminopropylamine, dimethylaminobutylamine, diethylaminopropylamine, diethylaminobutylamine, dipropylamine, similar compounds, and combinations thereof. In example 2, as the only example describing the synthesis of an amino group-functionalised epoxy resin, an epoxy resin is reacted with the diketimine of diethylene triamine, N-methylethanolamine, and N,N-dimethylaminopropylamine. See page 22, lines 10 to 19. The specific amount of substance of tertiary amino groups in the amines, *n*(³N) / *m*(amines), can be calculated from the amount of substance *n*(DMAPA) of dimethylaminopropylamine, *n*(³N) = *n*(DMAPA) = *m*(DMAPA) / M(DMAPA), where *m*(DMAPA) is the mass of dimethylaminopropylamine, and M(DMAPA) is its molar mass, 102.178 g/mol, as *n*(³N) = 15 g / (102.178 g/mol) = 0.1468 mol. As the mass of the amines, m(amines) = 44.1 g + 48.9 g + 15 g = 108.0 g, the specific amount of substance of tertiary amino groups in the amines *n*(³N) / *m*(amines) = 0.1468 mol / 108.8 g = 1.359 mol/kg. Yellowing or discolouration is not mentioned in this patent application.

In EP 2 319 877 A1, an aqueous stoving binder is disclosed which comprises a mixture AB of an amide-modified epoxy amine adduct A and a capped isocyanate B that has an allophanate as a structural element. See the abstract, and claim 1. Per claim 2, the amide-modified epoxy amine adduct A is a reaction product of an epoxide functional compound A1, of an amidoamine A3 prepared from a fatty acid A31 and an amine A32 having at least one primary or secondary amino group, and of compounds A2 which are reactive towards epoxide groups which compounds A2 are selected from amines A21 having at least two amino groups, where at least one is a primary amino group, from phenolic compounds A22 having at least two phenolic hydroxy groups, and from organic acids A23, with the proviso that at least one amine A21 and at least one phenolic compound A22 are used in the reaction to prepare the adduct A. A preferred amine A21 is an amine A212 having at least one primary and at least one tertiary amino group such as N,N-dimethylaminopropylamine, N,N-diethylaminopropylamine, N-(2-aminoethyl) piperidine, N-(2-aminoethyl) pyrrolidine, and N-(2-aminoethyl) piperazine. See paragraph [0016], page 4, lines 9 to 11. In all of the examples, and amine A212, in these cases, N,N-dimethylaminopropylamine which is a monoprimary and monotertiary amine, was used. The specific amount of substance of tertiary amino groups in the amines used is always greater than 1 mol/kg (in examples 2.1 to 2.9, [*n*(³N) / *m*(amines)] / [mol / kg] is 1.339; 1.589; 1.038; 1.445; 1.552; 1.589; 1.782; 1.5898; and 1.589). Yellowing or discolouration is not mentioned in this patent application.

None of these four last-named patent applications, individually, or combined in any combination of two, three, or all four of them, provides a teaching, suggestion or motivation to combine a hydroxy-functional cationic resin based on reaction products of multifunctional epoxides having on average two or more epoxide groups per molecule, and aliphatic amines having primary and secondary amino groups having a specific amount of substance of tertiary amino groups, *n*(³N) / *m*(amines), in the amines of not more than 0.1 mol/kg, with a crosslinker which is a blocked isocyanate having allophanate functional groups.

It has been found that certain cationic electrodeposited primer coatings for metals where crosslinkers based on toluene diisocyanate, abbreviated as "TDI", are used in combination with cationic resins based on reaction products of epoxides and amines give rise to a yellowing effect which appears in the coating layer applied onto the primer coating layer. Other aromatic diisocyanates, such as bis-(4-isocyanatophenyl)-methane, abbreviated as "MDI", show this yellowing effect in the primer coating layer alone, but have no yellowing effect for the second layer. It is believed that this difference is due to side products which are formed during curing and which cause yellowing. In the case of crosslinkers based on TDI, these side products are evaporating during curing of the second layer, whereas the side products in case of MDI do not evaporate during curing of the second layer and stay in the primer coating layer. This is believed to be due to the fact that the evaporation rate of TDI is higher than for MDI, due to its lower molar mass.

### Summary of the Invention

It is therefore an object of the present invention to provide a coating composition that can be applied to a substrate and cured by heating the coated substrate without yellowing of the coating layer during curing or by action of heat after curing, or by irradiation with visible light or UV light during or after curing. It has been found in the experiments leading to the present invention that the presence of allophanate groups in the isocyanate component leads to reduced yellowing, within a certain range of the amount of substance-fraction of allophanate groups in the isocyanate component, and with a low specific amount of substance of tertiary amino groups in the amines.

The invention therefore provides a coating composition containing a combination **C** of a hydroxy-functional cationic resin **R** based on reaction products of epoxides **E** and amines **A** and a crosslinker which is a blocked isocyanate **IB** prepared from a multifunctional isocyanate **I** and a hydroxy-functional blocking agent **B,** which blocked isocyanate **IB** has an amount of substance-fraction of from 5 % to 40 % of allophanate structures in the sum of urethane and allophanate structures. The specific amount of substance of tertiary amines in the amines **A** that are reacted with the epoxides **E** must not exceed 0.1 mol/kg, based on the mass of amines. Allophanate structures are formed by reaction of isocyanates with urethanes.

It has been found in the experiments underlying the present invention that such coating compositions where allophanate groups are present in the isocyanate component within the range mentioned, and which do not contain amines having tertiary amino groups such that the specific amount of substance of tertiary amino groups in the amines, *n*(³N) / m(amines), does nor exceed 0.1 mol/kg, show very low propensity to yellowing upon action of heat and/or visible or UV light on the coating composition, particularly during curing, and on the coating film prepared therewith, after curing.

### Detailed Description of the Preferred Embodiments

The hydroxy-functional cationic resin **R** is preferably dispersed in water, preferably with a mass fraction of solid resin in the aqueous dispersion of from 25 % to 60 %. The hydroxy-functional cationic resins **R** are cationic epoxy resins based on reaction products **EA** of multifunctional epoxides **E** having more than one epoxide group per molecule, and aliphatic amines **A** having at least one primary group and/or at least one secondary amino group. It is preferred that the amines **A** do not comprise amines **A3** having tertiary amino groups, preferably, the specific amount of substance of tertiary amino groups in the amines **A** should not exceed 0.1 mol/kg, and preferably, be not more than 0.05 mol/kg. The specific amount of substance *n*(³N) / *m(A)* of tertiary amino groups in the amines **A,** also referred to herein as "content", is measured as the amount of substance *n*(³N) of tertiary amino groups in the amines **A,** divided by the sum m(A) of the masses of all amines **A** which have been reacted to form the reaction products **EA,** or in the cationic hydroxy-functional resins **R.** Keeping the content of amines **A3** with tertiary amino groups in the amines **A** below these levels mentioned hereinabove, or preferably, at zero, further reduces the propensity to yellowing.

In a preferred embodiment, further reactants in the synthesis of hydroxy-functional cationic resins **R** are hydroxyaromatic compounds **D** having at least two, preferably two, hydroxyl groups bound to an aromatic structure, and preferably, from six to twenty carbon atoms, and/or aliphatic carboxylic acids **F** having one or two carboxyl groups, and preferably, from six to forty carbon atoms. The molar mass of the resulting adduct resins can be increased by reaction of the multifunctional epoxides **E** with compounds **D** in the so-called advancement process, before, during, or after reaction with the amines **A.** Aliphatic carboxylic acids **F** can be added to control the extent of the advancement reaction, and to convert epoxide groups to hydroxy ester groups. It is also possible to use phosphorus-based acids for that purpose, particularly organic or inorganic phosphoric acids, or organic phosphonic acids.

In a preferred embodiment of this invention, the multifunctional epoxides E are oligomers or polymers having an average number of 1,2-epoxide groups per molecule of greater than one and preferably about two, and preferably, epoxides which have, on average, two epoxide groups per molecule. Preferred multi-functional epoxides are glycidyl ethers of polyols, particularly, aromatic or mixed aromatic-aliphatic polyols, having more than one hydroxyl group in their molecules which has been reacted to form a glycidyl ether, as well as oligomers and polymers of these glycidyl ethers.

A polyol is, for the purpose of this invention, an organic hydroxy-functional compound that has at least two hydroxyl groups per molecule, or a mixture of two or more of such compounds where the average number of hydroxyl groups per molecule is more than one. An oligomer is, within the scope of this invention, a molecule having not more than five repeating units, and a polymer is a molecule having more than five repeating units.

Particularly preferred are glycidyl ethers of polyhydric phenols such as bisphenol A. "Polyhydric" means an alcohol or phenol that has more than one hydroxyl group. These multi-functional epoxides can be produced by etherification of polyhydric phenols with epihalohydrin or dihalohydrin such as epichlorohydrin or dichlorohydrin in the presence of alkali. Examples of polyhydric phenols are resorcinol, novolaks, 1,4-dihydroxynaphthalene, 2,6-dihydroxynaphthalene, 2,2-bis(4-hydroxyphenyl)propane, 1,1-bis-(4-hydroxyphenyl)ethane, bis(4-hydroxyphenyl)methane, 2-methyl-1,1-bis-(4-hydroxyphenyl)propane, 2,2-bis-(4-hydroxy-3-tertiary butylphenyl)propane, and bis-(2-hydroxynaphthyl)methane.

Besides polyhydric phenols, other polyols can be used in preparing the glycidyl ethers of polyols. Examples of other polyols are dihydroxypolyoxyalkylenes such as polyoxyethylene diol and polyoxypropylene diol, and cycloaliphatic polyols, such as 1,2-cyclo-hexanediol, 1,4-cyclohexanediol, 1,2-bis(hydroxymethyl)cyclohexane, hydrogenated bisphenol A, and 1,3-bis-(hydroxymethyl)-cyclohexane.

The multifunctional epoxides have a molar mass of at least 200 g/mol, and preferably within the range of 200 g/mol to 2 kg/mol, and more preferably from 340 g/mol to 2 kg/mol.

The multifunctional epoxide **E** is reacted with a cationic group former, which is an amine **A** selected from the group consisting of aliphatic amines **A1** having at least one primary amino group, and aliphatic amines **A2** having at least one secondary amino group, and mixtures of these. It is also preferred to use amines **A12** that have both primary and secondary amino groups.

The amine **A2** has one or more secondary amino groups, or is a mixture of two or more such amines **A2.** Preferred are aliphatic amines **A2** having secondary amino groups, and optionally, also hydroxyl groups. Particularly preferred are amines **A2** having one secondary amino group, and at least one hydroxyl group, and more preferred are amines **A2** that have one secondary amino group and two or more hydroxyl groups.

Examples of hydroxyl group-containing secondary amines **A2** are dialkanolamines, N,N'-bis-hydroxyalkyl alkylenediamines, N-substituted alkanolamines such as N-alkylalkanol-amines containing from two to eighteen carbon atoms in the alkanol and alkyl chains. Specific examples include N-methylethanolamine, N-ethylethanolamine, diethanolamine, diisopropanolamine, N,N'-bis-2-hydroxyethyl ethylenediamine, and N-hydroxyethyl tallow amine. Secondary amines **A2** which do not contain hydroxyl groups such as dialkyl amines and cycloaliphatic amines and substituted amines in which the substituents are other than hydroxyl and in which the substituents do not detrimentally affect the epoxide-amine reaction can also be used. Specific examples of such amines are diethylamine, dipropylamine, methylethylamine, N-methylcyclohexylamine, piperidine, morpholine, methylcocoamine and methyltallowamine. Mixtures of the various amines described above can be used.

As a primary amino group can react in sequence with two epoxide groups, the presence of primary amines in stoichiometric quantity, in combination with multifunctional epoxide compounds having at least two epoxide groups usually leads to branching, crosslinking and finally, gelation if there is more than one primary amino group in its molecule. Primary amines **A1** having more than one primary amino group can, however, be reacted with blocking compounds, preferably carbonyl compounds, and particularly preferred with ketones that convert the primary amino groups to ketimines, or Schiff bases. A Schiff base is not reactive with an epoxide compound at limited temperature, unless the ketimine structure is dissolved by reaction thereof with water. Useful amines **A1** are therefore amines **A12** having at least one primary and at least one secondary amino group, preferably two primary, and at least one secondary amino group, wherein the primary amino groups are temporarily blocked by reaction with a carbonyl compound, preferably a ketone. Preferred amines **A12** are alkylenepolyamines such as diethylene triamine, triethylene tetramine, tetraethylene pentamine, and their homologues, i. e. the 1,2-ethanediyl group being replaced by 1,2-propanediyl, 1,3-propanediyl, 1,2-butanediyl, 1,4-butanediyl, or 1,6-hexanediyl, particularly preferred among these are bis-(4-aminobutyl)amin, N,N'-bis-(4-aminobutyl)-1,4-diaminobutan, bis-(6-aminohexyl)amin, and N,N'-bis-(6-aminohexyl)-1,6-diaminohexan. Preferred ketones are aliphatic ketones R^{a} - CO - R^{b} where R^{a} and R^{b} are independently selected from linear or branched alkyl groups having from one to eight carbon atoms, such as methylethyl ketone, methyl propyl ketone, diethyl ketone, dipropylketone, methyl n-butylketone, and methyl-isobutylketone. The latter is particularly preferred.

The reaction of the amine **A** comprising either or both of amines **A1** and **A2** with the multifunctional epoxide **E** takes place upon mixing the amines with the epoxide. The reaction can be conducted neat, i. e., without solvent, or optionally, in the presence of a suitable solvent which does not interfere with the reactants or the product of the reaction. Reaction may be exothermic and cooling may be desired.

If both amines **A1** and **A2** are used, they can be added together, or sequentially in any order. The amine **A1** is always added in blocked form if there is more than one primary amino group per molecule, by temporarily reacting primary amino groups with a blocking compound which is preferably a carbonyl group-containing compound, preferably a ketone to form a ketimine, to avoid gelation.

The ketimine groups will decompose in reaction step d, upon dispersing the amine-epoxy reaction product in water resulting in free primary amine groups which are used to support dispersion of the product in water by at least partial neutralisation of the primary amino groups with added acid, and are also reactive with appropriate curing agents which are reactive towards active hydrogen atoms, such as those hydrogen atoms which are not bound to carbon atoms, from amines, alcohols, mercaptans, and phenols.

The invention is also directed to a process for preparing a coating composition **C** by
- optionally, in step a, reacting multifunctional epoxides **E** having, on average, two or more epoxide groups per molecule, or monofunctional aliphatic epoxides **M,** or mixtures of **E** and **M,** with either or both of hydroxyaromatic compounds **D** having at least two hydroxyl groups bound to an aromatic structure, and aliphatic acids **F** having one or two carboxyl groups,
- preparing, in step b, a hydroxy-functional cationic resin **R** by reacting multifunctional epoxides **E** having, on average, two or more epoxide groups per molecule, and/or the reaction product of step a, with aliphatic amines **A** having primary and/or secondary amino groups to form epoxide-amines adducts, wherein before reaction with the multifunctional epoxides **E,** primary amino groups in the amines **A** are blocked by reaction of the amine preferably with a ketone compound under formation of a ketimine, if there is more than one primary amino group in the amine, and wherein the amines **A** do not comprise more than a specific amount of substance *n*(³N) / *m(A)* of tertiary amino groups in the amines **A** of 0.1 mol/kg, where *n*(³N) is the amount of substance of tertiary amino groups in the amines **A,** and m(A) is the mass of the amines **A,** optionally in the presence of either or both of hydroxyaromatic compounds **D** having at least two hydroxyl groups bound to an aromatic structure, and aliphatic acids **F** having one or two carboxyl groups, and optionally, also an aliphatic monoepoxide **M,**
- optionally, in step c, reacting the product of step b with either or both of hydroxyaromatic compounds **D** having at least two hydroxyl groups bound to an aromatic structure, and aliphatic acids **F** having one or two carboxyl groups,
- dispersing under stirring, in step d, the reaction product of step b or of step c in water whereto an acid for at least partial neutralisation has been added, to form a dispersion,
- adding to the dispersion of step d, a crosslinker which is a blocked isocyanate **IB** prepared from a multifunctional isocyanate **I** and a hydroxy-functional blocking agent **B,** which blocked isocyanate **IB** has an amount of substance-fraction of from 5 % to 40 % of allophanate structures in the sum of urethane and allophanate structures.

In a preferred embodiment, an adduct of a primary aliphatic diamine with a monoepoxide compound **M** can be made in a separate step, which reaction forms a bis-hydroxyamino compound having two secondary amino groups, and two secondary hydroxyl groups. This secondary amine can be added to step a, or to step b, or to both. The monoepoxide compound **M** used is preferably an aliphatic compound, with particular preference, a glycidyl ester of an aliphatic acid which is preferably branched, and has from four to fifteen carbon atoms. Particularly preferred are reaction products of linear aliphatic diamines having from four to twelve carbon atoms, with the glycidyl esters of neopentanoic acic, neononanoic acid, neodecanoic acid, and neoundecanoic acid, or mixtures thereof.

The reaction product **R** of the multifunctional epoxide **E** with the amines **A** which may be primary amines **A1** and/or secondary amines **A2,** obtains its cationic character by at least partial neutralisation with acid. Examples of suitable acids include organic and inorganic acids such as formic acid, acetic acid, lactic acid, methane sulphonic acid, nitric acid, phosphoric acid, and carbonic acid. The preferred extent of neutralisation will depend upon the particular product involved. It is only necessary that sufficient acid be used to disperse the product in water. Typically, the amount of acid used will be sufficient to provide at least 30 % of the total theoretical neutralisation. Excess acid beyond that required for 100 % theoretical neutralisation can also be used.

Preferably, the reaction temperature of the epoxide functional compounds and the aminofunctional compounds ranges between 60 °C and 100 °C. It is not usually necessary to employ a solvent for the reaction, although a solvent such as a sterically hindered ester, ether, or a sterically hindered ketone may be used if desired.

The extent of cationic group formation of the hydroxy-functional cationic epoxy resins **R** should be selected in a way that the resin **R,** when mixed with aqueous medium, will form a stable dispersion. A stable dispersion is one which does not settle upon storage at room temperature (25 °C) during at least four weeks, or is easily redispersible if some sedimentation occurs. In addition, the dispersion should be of sufficient cationic character that the dispersed resin particles will migrate towards the cathode when an electrical potential is applied between an anode and a cathode immersed in the aqueous dispersion.

The hydroxy-functional cationic resins **R** of the invention preferably have a specific amount of substance of amino groups from 0.1 mol/kg to 3.0 mol/kg, particularly preferably from 0.3 mol/kg to 2.0 mol/kg, with relation to the mass of solids in the dispersion of resin **R.**

In a preferred embodiment, it is possible to improve the corrosion protection effect of a coating made from the combination of the cationic hydroxyfunctional resins **R** and the allophanate-containing blocked isocyanate **IB** by adding a plastifier **P** to the resin dispersion. This can be done after the synthesis of the resin dispersion, or, preferably, during one of the process steps as this provides better homogenisation. It has been found that polyoxypropylene glycols are ideally suited as they do not interfere with the resin synthesis, and provide a good effect. Among the commercially available grades that range from molar masses of about 250 g/mol up to 4000 g/mol, those in the range of from 400 g/mol to 1.2 kg/mol have shown the best performance. A preferred way is to add polypropylene glycol during the initial reaction of the multifunctional epoxides **E** with hydroxyaromatic compounds **D,** in step b or in step c.

An elegant way to incorporate polyoxypropylene moieties into the resin **R** is by functionalising the polyoxypropylene glycol by conversion to its diglycidylether, and adding this epoxide-functional polyoxypropylene to the epoxide resin during the synthesis of the resin **R.**

The hydroxy-functional cationic resins **R** of the invention can be used to formulate coating compositions together with water, the acids needed for at least partial neutralisation of the amino groups, blocked isocyanates **IB** that are used as curing agents which react with the hydroxy-functional cationic epoxy resins **R** to form a crosslinked network, and also, pigments, fillers, additives, particularly additives that reduce surface defects, anti-foaming agents, antisettling agents, wetting agents, thickeners and other rheology additives, and catalysts **G** to promote the crosslinking reaction with the curing agents **IB.**

The curing agents for the hydroxy-functional cationic resins **R** are capped multifunctional isocyanates **IB** which split off the capping agent **B** at the curing temperature to restore the multifunctional isocyanates **I** which then react with the active hydrogen atoms of the isocyanate-reactive groups present in the resin **R,** viz., primary amino groups, secondary amino groups, and hydroxyl groups, optionally also mercaptan groups and phosphine groups if present, to form the desired crosslinked structure.

The capped multifunctional isocyanates **IB** are made by reacting isocyanates **I** that are at least difunctional, with capping agents **B** having functional hydroxyl groups. In this reaction the isocyanate group is converted to a urethane group by an addition reaction of the isocyanate **I** and the hydroxy-functional capping agent **B.** As a stoichiometric excess of isocyanate **I** over the capping agents **B** is used, unreacted isocyanate can also react with the NH group in the urethane group under formation of an allophanate structure. In the context of the present invention, it is preferred that the blocked isocyanate **IB** has an amount of substance-fraction of from 5 % to 40 %, corresponding to from 5 cmol/mol to 40 cmol/mol, of allophanate structures in the sum of urethane and allophanate structures. A more preferred range for the amount of substance-fraction is from 10 % to 35 %, corresponding to from 10 cmol/mol to 35 cmol/mol, particularly preferred, from 15 % to 30 %, corresponding to from 15 cmol/mol to 30 cmol/mol. The amount of substance-fraction x (A) of allophanate structures in the sum of urethane and allophanate structures is calculated in the usual way from the amount of substance n(A) of allophanate structures, and amount of substance n(U) of urethane structures as *x* (A) = *n(A)* / [*n*(A) + *n(U)],* and can be measured in the SI unit "mol/mol", or any multiple thereof. As the amount of substance fraction is a quantity of the dimension one, the unit "%" where 1 % = 1 mol / 100 mol = 1 cmol/mol, is also frequently used.

A urethane group is, in the context of this invention, a group of formula III

Z¹ - NH - CO - O- Z² (Formula III),

where Z¹ and Z² are organic groups each of which are bound to the nitrogen and oxygen atoms in formula III via a carbon atom of the said organic group,
and an allophanate group is, in the context of this invention, a group of formula IV 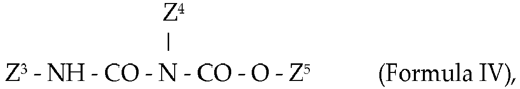 where Z³, Z⁴, and Z⁵ are organic groups each of which are bound to the nitrogen and oxygen atoms in formula IV via a carbon atom of the said organic group.

Both addition reactions, formation of allophanate, and formation of urethane, are reversible, and upon heating, optionally in the presence of a catalyst, the isocyanate function is regenerated, and the capping agent **B,** due to its higher volatility, escapes from the cured coating film during the curing reaction.

Useful capping agents **B** are organic hydroxy-functional compounds, selected from aliphatic alcohols having preferably from four to twelve carbon atoms, such as hexanol, 2-ethylhexanol, ether-alcohols such as ethyleneglycol monomethylether or ethyleneglycol monobutyl ether; phenols such as nonylphenol; and oximes such as methylethylketoxime; while NH-compounds such as 3,5-dimethylpyrazole and epsilon-caprolactam, and CH-compounds such as diethylmalonate cannot be used as they do not form a urethane by reaction with an isocyanate, and therefore cannot form allophanates either.

In a preferred embodiment, the blocked isocyanate **IB** is made in a two-step reaction wherein in the first step, a difunctional isocyanate is reacted with an organic hydroxy compound **O3** having at least three hydroxyl groups to form a partially blocked isocyanate, wherein the ratio *n*(NCO,I) / *n*(OH,O3) of the amount of substance of isocyanate groups n(NCO,I) of the diisocyanate **I** to the amount of substance *n*(OH, O3) of hydroxyl groups in the is not less than 3 mol/mol, and in the following step, the partially blocked isocyanate is reacted with an organic hydroxy-functional compound **B** to convert all remaining isocyanate groups to urethane groups. It is further preferred to use a chain-extended alcohol as the compound **O3,** such as a reaction product of a trihydric or tetrahydric alcohol with a lactone, whereby a trihydric or tetrahydric alcohol is made where the hydroxyl groups of the molecule are separated by oligomeric or polymeric polylactone chains. A similar effect can be reached by reacting a trihydric or tetrahydric alcohol with methyloxiran (propylene epoxide), whereas a reaction with ethylene oxide is less preferred as the oligomeric or polymeric oxyethylene chains render the coating more hydrophilic and impair the corrosion protection.

The multifunctional isocyanates **I** have an average of at least two isocyanate groups per molecule, and may be aliphatic, aromatic, or mixed aromatic-aliphatic. These isocyanates are preferably diisocyanates selected from the group consisting of hexamethylene diisocyanate ("HDI"), 1,6-diisocyanato-2,2,4-trimethylhexane, 1,6-diisocyanato-2,4,4-trimethylhexane, isophorone diisocyanate ("IPDI"), the commercially available mixture of isomeric diisocyanato toluene ("TDI"), alpha, alpha, alpha', alpha'-diisocyanato-m-xylene ("TMXDI"), bis-(4-isocyanatophenyl)methane ("MDI"), and bis-(4-isocyanatocyclohexyl)methane ("HMDI").

The catalysts **G** which are preferably used for the invention are compounds of elements of groups 4, 7, 8, 9, 12, 13, 14, and 15 of the fourth, fifth and sixth period of the periodic system of elements, according to New IUPAC Nomenclature, particularly preferably, of the elements Ti, Mn, Fe, Co, Ni, Zn, Cd, Ge, Sn, Pb, Sb, and Bi. Preferred are compounds that are well soluble in water, such as salts of these elements that dissociate into ions, in an aqueous system, and chelate compounds of these elements, where the chelate former may be an organic hydroxy acid such as lactic acid, 2,2-bishydroxymethyl propionic acid, an aminoacid such as N,N,N',N'-ethylenediamine tetraacetic acid, nitrilotriacetic acid, and beta-alanine, or a multifunctional amine or a hydroxyamine. Other useful compounds are organometallic compounds such as alkoxy metal oxides, and metal salt of organic acids or hydroxy acids. Particularly preferred are the methane sulphonates, lactates and bishydroxymethyl-propionates of bismuth, tin, lead, and titanium.

The combination of the hydroxy-functional cationic resin **R** with the capped multifunctional isocyanates **IB** according to this invention leads to paints which have very low propensity to yellowing, during exposure to elevated temperatures, such as above 80 °C, during curing, and also under action of light, or the combination of both elevated temperature and exposure to light. These paints are particularly useful in protection of metal substrates, as they show good adhesion, and good corrosion protection. They can preferably be applied by brushing, spraying, and dipping, and also by electrophoretic coating methods. They also provide a valuable base layer for application of subsequent coating layers.

Addition of pigments is common, in order to achieve good edge covering of metal substrates that were protected by an electro-deposited coating film against corrosion. Addition of pigments helps to prevent the propensity of the wet film to flow away from sharp edges of the substrate, particularly from edges of metal sheets, during curing.

It has been found that yellowing of the paint film layer during curing is markedly reduced when the epoxy amine adducts according to the present invention are used. Surprisingly, it has further been found that there is little or no propensity to yellowing upon action of heat or irradiation of a white powder topcoat applied onto a paint film made with the combination of the hydroxy-functional cationic resin **R** with the capped multifunctional isocyanates **IB** according to this invention, while similar paints which do not have the combination of selection of the amine components and the isocyanate crosslinker according to the present invention show a high propensity to yellowing under the said conditions.

The invention is further illustrated by the following examples which are not meant to be limiting. In these examples, as well as in the description, the following conventions have been used:
All concentrations (strengths) and ratios stated in "%" are mass fractions (ratio of the mass *m*_{B} of a substance B, divided by the mass m of the mixture or solution, or by the mass *m*_{D} of the second substance D, in the case of a ratio).
n is the symbol for the physical quantity "amount of substance" with the SI unit "mol". Yellowness Index (YI) was determined with a HunterLab instrument using illuminant D65, according to ASTM 313.

### Examples

### Example 1 (Comparative)

### 1.1 Blocked Isocyanate IB1

A blocked isocyanate IB1 was prepared by slow addition over two hours under thorough mixing, of 871 g (5 mol) of toluene diisocyanate (commercial mixture of 2,4- and 2,6-isomers) to 1432.5 g (11 mol) of 2-ethyl hexanol whereto 0.5 g of dibutyltin dilaurate had been added, and keeping the temperature during addition between 80 °C and 90 °C. After complete addition of the diisocyanate, the reaction mixture was stirred at the same temperature for four further hours. No residual isocyanate groups were detected thereafter. The blocked isocyanate (2273.5 g) had a specific amount of substance of crosslinkable blocked isocyanate groups of 4.3 mol/kg, and no allophanate groups.

### 1.2 Preparation of Cationic Resin R1

1.2.1 An adduct was made from 232.4 g of 1,6-diaminohexane (2 mol) and 953 g of Cardura™ E10 (commercial mixture of glycidyl esters of highly branched C₉- to C₁₁- aliphatic mono-carboxylic acids having a specific content of epoxide groups of 4.2 mol/kg).
1.2.2 616 g (1.04 mol) of the adduct of 1.2.1 were mixed with 560 g (2 mol) of tall oil fatty acid, and 1093 g of methoxypropanol as solvent at 90 °C and stirred until a clear solution had formed. Within one hour, 238 g of Cardura® E 10 (amount of substance of epoxide groups in this mass: *n*(EP) = 1 mol) were added while holding the temperature between 85 °C and 90 °C by cooling.
1.2.3 After one further hour of stirring the intermediate product of 1.2.2 at 85 °C, the following materials were added in sequence: 935 g of bisphenol A (4.1 mol), 210 g of diethanolamine (2 mol), and 184 g of 3-dimethylamino-1-propylamine (1.8 mol). When a clear solution was obtained at 80 °C, 3230 g (8.5 mol) of a liquid epoxide resin based on bisphenol A diglycidyl ether having a molar mass of 380 g/mol were added, the temperature rising due to the heat of reaction to about 150 °C. The reaction mixture was held at 150 °C for about one hour until no more unreacted epoxide groups were detectable. The product solution held a mass of resinous solids of 5973 g, corresponding to a mass fraction of resinous solids of 84.5 %. The specific amount of substance *n*(³N) / *m(A)* of tertiary amino groups in the amines was 1.8 mol / (616 g + 210 g + 184 g) = 1.782 mol/kg.
1.2.4 A dilution vessel was prepared by charging a mixture of 8800 g of deionised water and 450 g of an aqueous solution of acetic acid (having a concentration of 60 g/100 g, 3 mol), the resin solution was then added within thirty minutes under stirring. Temperature was then set to 70 °C, and stirring was continued for one further hour until a homogeneous dispersion was obtained. Further water was added in portions to reach a final mass fraction of solids of 35 % in the dispersion.

### 1.3 Preparation of CED Clear Paint

800 g of the resin dispersion of 1.2.4 having a mass fraction of solids of 35 %, which comprises 280 g of solid resin, were mixed with 81.4 g of the blocked isocyanate IB1 of 1.1.

### 1.4 Application and curing of the CED Paint of 1.3

Zinc phosphated steel sheets were electrocoated with this paint at 30 °C and 300 V for two minutes. After baking at 200 °C for ten minutes, a clear yellow film was obtained having a layer thickness of 22 µm and a pencil hardness of 4H.

### 1.5 Application of a White Powder Topcoat

The steel sheet of 1.4 was overcoated with a white pigmented powder coating composition which was prepared as follows:

### 1.5.1 (Resin 1)

A reaction flask equipped with stirrer, addition funnel, distillation head, and thermometer was charged with 900 g of pseudocumene and heated to 150 °C. At this temperature a mixture of 60 g of di-tert.-butyl peroxide, 1000 g of methyl methacrylate, 1200 g of styrene and 800 g of glycidyl methacrylate were added over eight hours. After one hour, 30 g of triphenylphosphite were added, and the solvent was flashed off at 160 °C under reduced pressure until a mass fraction of solids of 99.2 % was reached. The polymer formed had a specific epoxide group content of 1.82 mol/kg ("epoxy equivalent weight" or "EEW": 550 g/mol). 5 g of hydroquinone monomethylether and 1 g of phenothiazine were added. After homogenisation of the resultant mass, 200 g of methacrylic acid were added dropwise over ten minutes. After further ten minutes, the acid number was 1.0 mg/g. The temperature of 160 °C was maintained for another hour and finally the mixture was discharged. The following data were obtained:

| | |
|---|---|
| Acid number: | 0.5 mg/g |
| Viscosity at 160 °C | 8000 mPa·s |
| Glass transition temperature | 54 °C |
| specific epoxide group content | 0.93 mol/kg |
| ("EEW" | 1200 g/mol) |
| specific content of olefinic double bonds | 0.71 mol/kg |

### 1.5.2 Resin 2

A reaction flask equipped with stirrer, addition funnel, and thermometer was charged with 1950 g of dodecanedioic polyanhydride and heated to 140 °C. When a clear melt of the polyanhydride was obtained, 3 g of hydroquinone monomethylether were added, the mixture was homogenised, and over ten minutes, 90 g of glycidyl methacrylate were added. After ten minutes of stirring, no epoxy groups were detectable anymore (the specific epoxide group content was less than 0.2 mol/kg, "EEW" > 5000 g/mol) and after further reaction during one hour at 140 °C, a semi-crystalline modified polyanhydride was discharged. The following data were obtained from the product:

| | |
|---|---|
| Melting temperature | 82 °C |
| Partial acid number | 400 mg/g |
| specific content of olefinic double bonds | 0.31 mol/kg |
| specific epoxide group content | < 0.2 mol/kg |
| ("EEW" | not detectable (> 5000 g/mol)) |

### 1.5.3 Preparation of a of a White Powder Topcoat

A mixture was prepared from the following ingredients:

| | |
|---|---|
| Resin 1 (1.5.1) | 497 g |
| Resin 2 (1.5.2) | 230 g |
| Flow promoter | 50 g |
| 2-hydroxy-4'-2-hydroxyethoxy)-2-methylpropiophenone | 10 g (®Irgacure 2959) |
| bis(2,4,6-trimethylbenzoyl)-phenylphosphineoxide | 10 g (®Irgacure 819) |
| benzoin | 3 g |
| titanium dioxide (surface treated with Al and Si compounds) | 200 g (®Kronos 2160) |

Irgacure materials were purchased from BASF SE, Kronos 2160 titanium dioxide was purchased from Kronos Titan GmbH. The ingredients were mixed in powder form and fed to a laboratory extruder to obtain pellets which were subsequently milled.

### 1.5.4 Application of the White Powder Topcoat

A fraction of the milled powder coating composition prepared in 1.5.3 having a particle size of from 30 µm to 50 µm was used for application with a with corona gun onto the CED layer of steel panels prepared in 1.4; curing of the powder coating was effected in a convection oven at 140 °C for 30 minutes. The film thickness was in each case 85 µm.

### 1.6 Yellowness Index Assessment

The CED layer on the steel sheet had a yellow tint (YI value in colour test was over 5) after curing (after step 1.4). After curing of the white powder coating in step 1.5.4, the coated steel sheet was compared to a glass plate having no CED layer, and the same film thickness of powder coating. While the powder coating layer on the control glass plate had a YI value of between -1 and +1, the YI value of the powder coating layer on the coated steel sheet was over 5.

### Example 2 (Comparative)

### 2.1 Blocked allophanate-containing isocyanate IB2

1432.5 g (11 mol) of 2-ethyl hexanol and 3.1 g of sodium phenolate were charged in a glass vessel and heated to 80°C. 1742 g (10 mol) of toluene diisocyanate (commercial mixture of the 2,4- and 2,6-isomers) were added in portions under cooling to keep the temperature in the range of from 80 °C to 85 °C. When the whole amount of diisocyanate had been added, the reaction mass was kept at from 80 °C to 90 °C until complete consumption of the isocyanate groups. An allophanate-containing oligomeric isocyanate having an average molar mass of 3170 g/mol and a specific content of crosslinking isocyanate groups of 6.33 mol/kg was obtained. The blocked isocyanate has an amount of substance-fraction of 0.29 mol/mol (corresponding to 29 %) of allophanate structures in the sum of urethane and allophanate structures.

### 2.2 Preparation of CED Clear Paint 2

A mixture was prepared from 800 g of the resin dispersion of Example 1, section 1.2, and from 55.3 g of the allophanate-containing blocked isocyanate IB2 of section 2.1 of this example.

### 2.3 Application and Curing of the CED Paint 2

Zinc phosphated steel sheets were electrocoated with the paint of 2.2 at 30 °C and 300 V for two minutes. After baking at 200 °C for ten minutes, a clear, light yellow film was obtained having a layer thickness of 22 µm and a pencil hardness of 4H.

### 2.4 Application of a White Powder Topcoat

The steel sheets of 2.4 were overcoated with a white pigmented powder coating composition and then cured, as described in section 1.5 of Example 1.

### 2.5 Yellowness Index Assessment

The CED layer on the steel sheet had a light yellow tint (YI value in colour test was over 1 and less than 5 with an average of 3.0) after curing (after step 2.3). After curing of the white powder coating in step 2.4, the coated steel sheet was compared to a glass plate having no CED layer, and the same film thickness of powder coating. While the powder coating layer on the control glass plate had a YI value of between -1 and +1, the YI value of the powder coating layer on the coated steel sheet was over 5.

### Example 3 (Comparative)

### 3.1 Blocked Isocyanate IB1

The blocked isocyanate of Example 1, section 1.1 was used in this example.

### 3.2 Preparation of cationic resin R2

3.2.1 An adduct was made from 232.4 g of 1,6-diaminohexane (2 mol) and 953 g of Cardura™ E10 (commercial mixture of glycidyl esters of highly branched C₉- to C₁₁- aliphatic mono-carboxylic acids having a specific content of epoxide groups of 4.2 mol/kg).
3.2.2 616 g (1.04 mol) of this adduct were mixed with 560 g (2 mol) of tall oil fatty acid, and 1093 g of methoxypropanol as solvent at 90°C and stirred until a clear solution had formed. Within one hour, 238 g of Cardura E 10 (amount of substance of epoxide groups n(EP) = 1 mol) were added while holding the temperature between 85°C and 90°C by cooling. After one further hour of stirring at 85 °C, the following products were added in sequence: 935 g of bisphenol A (4.1 mol), 210 g of diethanolamine (2 mol) and 965 g (3.61 mol) of the bisketimine of two molecules of methylisobutyl ketone and one molecule of diethylenetriamine (N,N-bis-2-aminoethyl)-amine. When a clear solution was obtained at 80 °C, 3230 g (8.5 mol) of a liquid epoxide resin based on bisphenol A diglycidylether having a molar mass of 380 g/mol were added, the temperature rising due to the heat of reaction to about 150 °C. The reaction mixture was held at 150 °C for about one hour until no more unreacted epoxide groups were detectable. A dilution vessel was prepared by charging a mixture of 8800 g of deionised water and 450 g of an aqueous solution of acetic acid (having a concentration of 60 g/100 g, 3 mol), the resin solution was then added within thirty minutes under stirring. Temperature was then set to 70 °C, and stirring was continued for one further hour until a homogeneous dispersion was obtained. Water was added in portions to a final mass fraction of solids of 35 %. The specific amount of substance *n*(³N) / *m(A)* of tertiary amino groups in the amines was zero.

### 3.3 Preparation of CED Clear Paint

800 g of the resin dispersion of 3.2.2 having a mass fraction of solids of 35 %, which comprises 280 g of solid resin, were mixed with 211.4 g of the blocked isocyanate IB1 of 1.1.

### 3.4 Application and curing of the CED Paint of 3.3

Zinc phosphated steel sheets were electrocoated with this paint at 30 °C and 300 V for two minutes. After baking at 200 °C for ten minutes, a clear yellow film was obtained having a layer thickness of 22 µm and a pencil hardness of 4H.

### 3.5 Application of a White Powder Topcoat

The steel sheets of step 3.4 were overcoated with a white pigmented powder coating composition and then cured, as described in Example 1.

### 3.6 Yellowness Index Assessment

The CED layer on the steel sheet had a light yellow tint (YI value in colour test was over 1 and less than 5, with an average of 2.8) after curing (in step 3.4). After curing of the white powder coating in step 3.5, the coated steel sheet was compared to a glass plate having no CED layer, and the same film thickness of powder coating. While the powder coating layer on the control glass plate had a YI value of between -1 and +1, the YI value of the powder coating layer on the coated steel sheet was over 5.

### Example 4 (according to the Invention)

4.1 The allophanate-containing blocked isocyanate of Example 2, section 2.1, was used.
4.2 Preparation of CED Clear Paint 4
   800 g of the resin dispersion of Example 3, section 3.2 was used with 143.6 g of the blocked isocyanate of example 2 (section 2.1).
4.3 Application and Curing of the CED Paint of 4.2
   Zinc phosphated steel sheets were electrocoated with this resin solution 30°C and at 300 V for three minutes. After baking at 200°C for ten minutes, a clear, light yellow film was obtained having a layer thickness of 22 µm and a pencil hardness of 4H.
4.4 Application of a White Powder Topcoat
   The steel sheets of 4.3 were overcoated with a white pigmented powder coating composition as described in Example 1.
4.5 Yellowness Index Assessment
   The CED layer on the steel sheet had no yellow tint (YI value in colour test was between -1 and +1, with an average of 0) after curing (4.3). After curing of the white powder coating in 4.4, the coated steel sheet was compared to a glass plate having no CED layer, and the same film thickness of powder coating. Both the powder coating layer on the control glass plate and the powder coating layer on the coated steel sheet had a YI value of between -1 and +1, with an average of 0.

## Claims

1. A coating composition comprising a combination **C** of a hydroxy-functional cationic resin **R** based on reaction products of multifunctional epoxides **E** having, on average, two or more epoxide groups per molecule, and aliphatic amines **A** having primary and/or secondary amino groups, and a crosslinker which is a blocked isocyanate **IB** prepared from a multifunctional isocyanate **I** and a hydroxy-functional blocking agent **B,** which blocked isocyanate **IB** has an amount of substance-fraction of from 5 % to 40 % of allophanate structures in the sum of urethane and allophanate structures, wherein before reaction with the multifunctional epoxides **E,** primary amino groups in the amines **A** are blocked by reaction of the amine preferably with a ketone compound under formation of a ketimine, if there is more than one primary amino group in the amine, and wherein the amines **A** do not comprise more than a specific amount of substance *n*(³N) / *m(A)* of tertiary amino groups in the amines **A** of 0.1 mol/kg, where *n*(³N) is the amount of substance of tertiary amino groups in the amines **A,** and m(A) is the mass of the amines **A.**

2. The coating composition **C** of claim 1 wherein the amines **A** comprise at least one amine A2 having at least one secondary amino group.

3. The coating composition **C** of claim 1 or of claim 2 wherein the amines **A** comprise at least one amine **A12** having at least one primary amino group and at least one secondary amino group, wherein the primary amino groups of the at least one amine **A12** are converted to the corresponding ketimines by reaction of the amine with a ketone under liberation of water, before reaction with the epoxides **E.**

4. The coating composition **C** of any of claims 1 to 3 wherein either or both of hydroxyaromatic compounds **D** having at least two hydroxyl groups bound to an aromatic structure, and aliphatic acids **F** having one or two carboxyl groups are added to the epoxides **E** before, during, or after the reaction thereof with amines **A.**

5. The coating composition **C** of any of claims 1 to 4 wherein a plastifier **P** is incorporated into the hydroxyfunctional cationic resin **R,** the plastifier being a polyoxypropylene glycol having a molar mass of from 250 g/mol to 4 kg/mol.

6. The coating composition **C** of any of claims 1 to 5 wherein the blocked isocyanate **IB** is made in a two-step reaction wherein in the first step, a difunctional isocyanate is reacted with an alcohol **O3** having at least three hydroxyl groups to form a partially blocked isocyanate, wherein the ratio *n*(NCO, I)/ *n*(OH,O3) of the amount of substance of isocyanate groups *n*(NCO,I) of the diisocyanate **I** to the amount of substance n(OH, O3) is not less than 3 mol/mol, and in the following step, the partially blocked isocyanate is reacted with an organic hydroxy-functional compound to convert all remaining isocyanate groups to urethane groups.

7. The coating composition **C** of claim 3 where a mixture of diethanolamine and the bisketimine of diethylene triamine is used as amines **A.**

8. A process for preparing a coating composition **C** by
- optionally, in step a, reacting multifunctional epoxides **E** having, on average, two or more epoxide groups per molecule, with either or both of hydroxyaromatic compounds **D** having at least two hydroxyl groups bound to an aromatic structure, and aliphatic acids **F** having one or two carboxyl groups,
- preparing, in step b, a hydroxy-functional cationic resin **R** by reacting multifunctional epoxides **E** having, on average, two or more epoxide groups per molecule, and/or the reaction product of step a, with aliphatic amines **A** having primary and/or secondary amino groups to form epoxide-amines adducts, wherein primary amino groups in the amines **A** are blocked by reaction of the amine preferably with a ketone compound before reaction with the multifunctional epoxides **E,** under formation of a ketimine, if there is more than one primary amino group in the amine, and wherein the amines **A** do not comprise more than a specific amount of substance *n*(³N) / *m(A)* of tertiary amino groups in the amines **A** of 0.1 mol/kg, where *n*(³N) is the amount of substance of tertiary amino groups in the amines **A,** and m(A) is the mass of the amines **A,** optionally in the presence of either or both of hydroxyaromatic compounds **D** having at least two hydroxyl groups bound to an aromatic structure, and aliphatic acids F having one or two carboxyl groups,
- optionally, in step c, reacting the product of step b with either or both of hydroxyaromatic compounds **D** having at least two hydroxyl groups bound to an aromatic structure, and aliphatic acids **F** having one or two carboxyl groups,
- dispersing under stirring, in step d, the reaction product of step b or of step c in water whereto an acid for at least partial neutralisation has been added, to form a dispersion,
- adding to the dispersion of step d, a crosslinker which is a blocked isocyanate **IB** prepared from a multifunctional isocyanate **I** and a hydroxy-functional blocking agent **B,** which blocked isocyanate **IB** has an amount of substance-fraction of from 5 % to 40 % of allophanate structures in the sum of urethane and allophanate structures.

9. The process of claim 8 for preparing a coating composition **C** wherein the blocked isocyanate **IB** is made in a two-step reaction wherein in the first step, a difunctional isocyanate is reacted with an organic hydroxy compound **O3** having at least three hydroxyl groups to form a partially blocked isocyanate, wherein the ratio n(NCO,I) / *n*(OH,O3) of the amount of substance of isocyanate groups *n*(NCO,I) of the diisocyanate **I** to the amount of substance *n*(OH, O3) of hydroxyl groups in the is not less than 3 mol/mol, and in the following step, the partially blocked isocyanate is reacted with an organic hydroxy-functional compound **B** to convert all remaining isocyanate groups to urethane groups.

10. A method to coat a conductive substrate by electrodeposition of the coating composition of claim 1 or made by the process of any of claims 8 and 9, comprising the steps of adding a pigment paste to the coating composition of claim 1 or made by the process of any of claims 8 and 9, homogenising the mixture thus obtained and filling the mixture into a tank comprising anodes, immerse a conductive substrate into the tank containing the homogenised mixture, and applying a voltage to the conductive substrate which is used as cathode whereby the positively charged paint particles are deposited onto the substrate.

## Patentansprüche

1. Beschichtungszusammensetzung, umfassend eine Kombination **C** aus einem hydroxyfunktionellen kationischen Harz **R,** basierend auf Reaktionsprodukten von multifunktionellen Epoxiden **E** mit durchschnittlich zwei oder mehr Epoxidgruppen pro Molekül und aliphatischen Aminen **A** mit primären und/oder sekundären Aminogruppen, und einem Vernetzer, der ein blockiertes Isocyanat **IB** ist, das aus einem multifunktionellen Isocyanat **I** und einem hydroxyfunktionellen Blockierungsmittel **B** hergestellt ist, wobei das blockierte Isocyanat **IB** eine Stoffmengenfraktion von 5 % bis 40 % an Allophanatstrukturen in der Summe von Urethan und Allophanatstrukturen aufweist, wobei vor der Umsetzung mit den multifunktionellen Epoxiden **E** primäre Aminogruppen in den Aminen **A** durch Umsetzen des Amins, vorzugsweise mit einer Ketonverbindung, unter Bildung eines Ketimins blockiert werden, wenn mehr als eine primäre Aminogruppe in dem Amin vorliegt, und wobei die Amine **A** nicht mehr als eine spezifische Stoffmenge *n*(³N) / *m*(A) an tertiären Aminogruppen in den Aminen **A** von 0,1 mol/kg umfassen, wobei *n*(³N) die Stoffmenge an tertiären Aminogruppen in den Aminen **A** ist und *m*(A) die Masse an den Aminen **A** ist.

2. Beschichtungszusammensetzung C nach Anspruch 1, wobei die Amine **A** mindestens ein Amin **A2** mit mindestens einer sekundären Aminogruppe umfassen.

3. Beschichtungszusammensetzung **C** nach Anspruch 1 oder nach Anspruch 2, wobei die Amine **A** mindestens ein Amin **A12** mit mindestens einer primären Aminogruppe und mindestens einer sekundären Aminogruppe umfassen, wobei die primären Aminogruppen des mindestens einen Amins **A12** durch Umsetzung des Amins mit einem Keton unter Freisetzung von Wasser, vor der Umsetzung mit den Epoxiden **E,** in die entsprechenden Ketimine umgewandelt werden.

4. Beschichtungszusammensetzung **C** nach einem der Ansprüche 1 bis 3, wobei den Epoxiden **E** vor, während oder nach deren Umsetzung mit Aminen **A** eine oder beide der hydroxyaromatischen Verbindungen **D** mit mindestens zwei an eine aromatische Struktur gebundenen Hydroxylgruppen und aliphatische Säuren **F** mit einer oder zwei Carboxylgruppen zugegeben werden.

5. Beschichtungszusammensetzung **C** nach einem der Ansprüche 1 bis 4, wobei ein Weichmacher **P** in das hydroxyfunktionelle kationische Harz **R** aufgenommen wird, wobei der Weichmacher ein Polyoxypropylenglycol mit einer Molmasse von 250 g/mol bis 4 kg/mol ist.

6. Beschichtungszusammensetzung **C** nach einem der Ansprüche 1 bis 5, wobei das blockierte Isocyanat **IB** in einer Zwei-Schritt-Reaktion hergestellt wird, wobei im ersten Schritt ein difunktionelles Isocyanat mit einem Alkohol **O3** mit mindestens drei Hydroxylgruppen unter Bildung eines teilweise blockierten Isocyanats umgesetzt wird, wobei das Verhältnis *n*(NCO, I) / *n*(OH, O3) der Stoffmenge an Isocyanatgruppen n(NCO, I) des Diisocyanats **I** zu der Stoffmenge n(OH, O3) nicht weniger als 3 mol/mol beträgt, und im folgenden Schritt das teilweise blockierte Isocyanat mit einer organischen hydroxyfunktionellen Verbindung umgesetzt wird, um alle verbliebenen Isocyanatgruppen in Urethangruppen umzuwandeln.

7. Beschichtungszusammensetzung **C** nach Anspruch 3, wobei ein Gemisch aus Diethanolamin und dem Bisketimin von Diethylentriamin als Amine **A** verwendet wird.

8. Verfahren zur Herstellung einer Beschichtungszusammensetzung **C** durch
- gegebenenfalls in Schritt a Umsetzen multifunktioneller Epoxide **E** mit durchschnittlich zwei oder mehr Epoxidgruppen pro Molekül mit einer oder beiden der hydroxyaromatischen Verbindungen **D** mit mindestens zwei an eine aromatische Struktur gebundenen Hydroxylgruppen, und aliphatischer Säuren F mit einer oder zwei Carboxylgruppen,
- Herstellen in Schritt b eines hydroxyfunktionellen kationischen Harzes **R** durch Umsetzen multifunktioneller Epoxide **E** mit durchschnittlich zwei oder mehr Epoxidgruppen pro Molekül und/oder des Reaktionsproduktes aus Schritt a mit aliphatischen Aminen **A** mit primären und/oder sekundären Aminogruppen unter Bildung von Epoxid-Amin-Addukten, wobei primäre Aminogruppen in den Aminen **A** durch Umsetzung des Amins, vorzugsweise mit einer Ketonverbindung, vor der Umsetzung mit den multifunktionellen Epoxiden **E,** unter Bildung eines Ketimins, blockiert werden, wenn mehr als eine primäre Aminogruppe in dem Amin vorliegt, und wobei die Amine A nicht mehr als eine spezifische Stoffmenge *n*(³N) / *m*(A) an tertiären Aminogruppen in den Aminen **A** von 0,1 mol/kg umfassen, wobei *n*(³N) die Stoffmenge an tertiären Aminogruppen in den Aminen **A** ist und *m*(A) die Masse an den Aminen **A** ist, gegebenenfalls in Gegenwart einer oder beider der hydroxyaromatischen Verbindungen **D** mit mindestens zwei an eine aromatische Struktur gebundenen Hydroxylgruppen und aliphatischer Säuren **F** mit einer oder zwei Carboxylgruppen,
- gegebenenfalls in Schritt c Umsetzen des Produktes aus Schritt b mit einer oder beiden der hydroxyaromatischen Verbindungen **D** mit mindestens zwei an eine aromatische Struktur gebundenen Hydroxylgruppen und aliphatischen Säuren **F** mit einer oder zwei Carboxylgruppen,
- Dispergieren unter Rühren in Schritt d des Reaktionsproduktes aus Schritt b oder Schritt c in Wasser, wozu eine Säure zumindest zur teilweisen Neutralisation zugegeben worden ist, unter Bildung einer Dispersion,
- Zugeben zu der Dispersion von Schritt d eines Vernetzers, der ein blockiertes Isocyanat **IB** ist, das aus einem multifunktionellen Isocyanat **I** und einem hydroxyfunktionellen Blockierungsmittel **B** hergestellt ist, wobei das blockierte Isocyanat **IB** eine Stoffmengenfraktion von 5 % bis 40 % an Allophanatstrukturen in der Summe von Urethan- und Allophanatstrukturen aufweist.

9. Verfahren nach Anspruch 8 zur Herstellung einer Beschichtungszusammensetzung C, wobei das blockierte Isocyanat **IB** in einer Zwei-Schritt-Reaktion hergestellt wird, wobei im ersten Schritt ein difunktionelles Isocyanat mit einer organischen Hydroxyverbindung **O3** mit mindestens drei Hydroxylgruppen unter Bildung eines teilweise blockierten Isocyanats umgesetzt wird, wobei das Verhältnis *n*(NCO, I) / *n*(OH, O3) der Stoffmenge an Isocyanatgruppen *n*(NCO, I) des Diisocyanats I zu der Stoffmenge n(OH, O3) der Hydroxylgruppen nicht weniger als 3 mol/mol beträgt, und im folgenden Schritt das teilweise blockierte Isocyanat mit einer organischen hydroxyfunktionellen Verbindung **B** umgesetzt wird, um alle verbliebenen Isocyanatgruppen in Urethangruppen umzuwandeln.

10. Verfahren zum Beschichten eines leitfähigen Substrats durch elektrochemisches Abscheiden der Beschichtungszusammensetzung nach Anspruch 1 oder hergestellt durch das Verfahren nach einem der Ansprüche 8 und 9, umfassend die Schritte des Zugebens einer Pigmentpaste zu der Beschichtungszusammensetzung nach Anspruch 1 oder hergestellt durch das Verfahren nach einem der Ansprüche 8 und 9, Homogenisieren des so erhaltenen Gemisches und Füllen des Gemisches in einen Tank, umfassend Anoden, Tauchen eines leitfähigen Substrats in den Tank, der das homogenisierte Gemisch enthält, und Anlegen einer Spannung an das leitfähige Substrat, das als Kathode verwendet wird, wodurch die positiv geladenen Farbpartikel auf dem Substrat abgeschieden werden.

## Revendications

1. Composition de revêtement comprenant une combinaison C d'une résine cationique à fonction hydroxy R à base de produits de réaction d'époxydes multifonctionnels E ayant, en moyenne, deux ou plus de deux groupes époxyde par molécule, et des amines aliphatiques A ayant des groupes amino primaires et/ou secondaires, et un agent de réticulation qui est un isocyanate bloqué IB préparé à partir d'un isocyanate multifonctionnel I et un agent bloquant à fonction hydroxy B, ledit isocyanate bloqué IB comportant une quantité de fraction de substance de 5 % à 40 % de structures d'allophanate dans la somme des structures d'uréthane et d'allophanate, dans laquelle, avant la réaction avec les époxydes multifonctionnels E, les groupes amino primaires dans les amines A sont bloqués par réaction de l'amine, de préférence avec un composé cétonique avec formation d'une cétimine, s'il y a plus d'un groupe amino primaire dans l'amine, et dans laquelle les amines A ne comprennent pas plus qu'une quantité spécifique de substance *n(*³N)/*m*(A) de groupes amino tertiaires dans les amines A de 0,1 mol/kg, où *n*(³N) est la quantité de substance de groupes amino tertiaires dans les amines A, et *m*(A) est la masse des amines A.

2. Composition de revêtement C selon la revendication 1 dans laquelle les amines A comprennent au moins une amine A2 comportant au moins un groupe amino secondaire.

3. Composition de revêtement C selon la revendication 1 ou selon la revendication 2 dans laquelle les amines A comprennent au moins une amine A12 comportant au moins un groupe amino primaire et au moins un groupe amino secondaire, dans laquelle les groupes amino primaires de l'au moins une amine A12 sont convertis en cétimines correspondantes par réaction de l'amine avec une cétone avec libération d'eau, avant réaction avec les époxydes E.

4. Composition de revêtement C selon l'une quelconque des revendications 1 à 3 dans laquelle l'un ou les deux parmi des composés hydroxyaromatiques D ayant au moins deux groupes hydroxyle liés à une structure aromatique, et des acides aliphatiques F ayant un ou deux groupes carboxyle sont ajoutés aux époxydes E avant, pendant, ou après la réaction de ceux-ci avec des amines A.

5. Composition de revêtement C selon l'une quelconque des revendications 1 à 4 dans laquelle un plastifiant P est incorporé dans la résine cationique à fonction hydroxy R, le plastifiant étant un polyoxypropylène glycol ayant une masse molaire de 250 g/mol à 4 kg/mol.

6. Composition de revêtement C selon l'une quelconque des revendications 1 à 5 dans laquelle l'isocyanate bloqué IB est fabriqué dans une réaction à deux étapes dans laquelle, dans la première étape, un isocyanate difonctionnel réagit avec un alcool O3 ayant au moins trois groupes hydroxyle pour former un isocyanate partiellement bloqué, dans laquelle le rapport *n*(NCO,I)/*n*(OH,O3) de la quantité de substance de groupes isocyanate *n*(NCO,I) du diisocyanate I à la quantité de substance *n*(OH,O3) n'est pas inférieur à 3 mol/mol, et dans l'étape suivante, l'isocyanate partiellement bloqué réagit avec un composé à fonction hydroxy organique pour convertir tous les groupes isocyanate restants en groupes uréthane.

7. Composition de revêtement C selon la revendication 3 où un mélange de diéthanolamine et de la biscétimine de diéthylènetriamine est utilisé en tant qu'amines A.

8. Procédé de préparation d'une composition de revêtement C par
- facultativement, dans l'étape a, réaction d'époxydes multifonctionnels E ayant, en moyenne, deux ou plus de deux groupes époxyde par molécule, avec l'un ou les deux parmi des composés hydroxyaromatiques D ayant au moins deux groupes hydroxyle liés à une structure aromatique, et des acides aliphatiques F ayant un ou deux groupes carboxyle,
- préparation, dans l'étape b, d'une résine cationique à fonction hydroxy R par réaction d'époxydes multifonctionnels E ayant, en moyenne, deux ou plus de deux groupes époxyde par molécule, et/ou du produit de réaction de l'étape a, avec des amines aliphatiques A ayant des groupes amino primaires et/ou secondaires pour former des adduits époxyde-amine, dans lequel les groupes amino primaires dans les amines A sont bloqués par réaction de l'amine, de préférence avec un composé cétonique avant réaction avec les époxydes multifonctionnels E, avec formation d'une cétimine, s'il y a plus d'un groupe amino primaire dans l'amine, et dans lequel les amines A ne comprennent pas plus qu'une quantité spécifique de substance *n*(³N)/*m*(A) de groupes amino tertiaires dans les amines A de 0,1 mol/kg, où *n*(³N) est la quantité de substance de groupes amino tertiaires dans les amines A, et *m*(A) est la masse des amines A, facultativement en présence de l'un ou des deux parmi des composés hydroxyaromatiques D ayant au moins deux groupes hydroxyle liés à une structure aromatique, et des acides aliphatiques F ayant un ou deux groupes carboxyle,
- facultativement, dans l'étape c, réaction du produit de l'étape b avec l'un ou les deux parmi des composés hydroxyaromatiques D ayant au moins deux groupes hydroxyle liés à une structure aromatique, et des acides aliphatiques F ayant un ou deux groupes carboxyle,
- dispersion sous agitation, dans l'étape d, du produit de réaction de l'étape b ou de l'étape c dans de l'eau à laquelle un acide pour neutralisation au moins partielle a été ajouté, pour former une dispersion,
- ajout à la dispersion de l'étape d, d'un agent de réticulation qui est un isocyanate bloqué IB préparé à partir d'un isocyanate multifonctionnel I et d'un agent bloquant à fonction hydroxy B, ledit isocyanate bloqué IB comportant une quantité de fraction de substance de 5 % à 40 % de structures d'allophanate dans la somme des structures d'uréthane et d'allophanate.

9. Procédé selon la revendication 8 pour préparer une composition de revêtement C dans lequel l'isocyanate bloqué IB est fabriqué dans une réaction à deux étapes dans lequel, dans la première étape, un isocyanate difonctionnel réagit avec un composé hydroxy organique O3 ayant au moins trois groupes hydroxyle pour former un isocyanate partiellement bloqué, dans lequel le rapport *n*(NCO,I)/*n*(OH,O3) de la quantité de substance de groupes isocyanate *n*(NCO,I) du diisocyanate I à la quantité de substance *n*(OH,O3) de groupes hydroxyle n'est pas inférieur à 3 mol/mol, et dans l'étape suivante, l'isocyanate partiellement bloqué réagit avec un composé à fonction hydroxy organique B pour convertir tous les groupes isocyanate restants en groupes uréthane.

10. Procédé de revêtement d'un substrat conducteur par électrodéposition de la composition de revêtement selon la revendication 1 ou fabriquée par le procédé selon l'une quelconque des revendications 8 et 9, comprenant les étapes d'ajout d'une pâte de pigment à la composition de revêtement selon la revendication 1 ou fabriquée par le procédé selon l'une quelconque des revendications 8 et 9, homogénéisation du mélange obtenu ainsi et remplissage du mélange dans une cuve comprenant des anodes, immersion d'un substrat conducteur dans la cuve contenant le mélange homogénéisé, et application d'une tension au substrat conducteur qui est utilisé en tant que cathode dans lequel les particules de peinture chargées positivement sont déposées sur le substrat.
